# EUROPÄISCHE PATENTSCHRIFT

(11) **EP 2 101 676 B1**
(45) Veröffentlichungstag und Bekanntmachung des Hinweises auf die Patenterteilung: **04.03.2015**
(21) Anmeldenummer: 07856515.7
(22) Anmeldetag: 10.12.2007
(51) Int. Cl.: A61C 8/00

(54) **ANORDNUNG ZUR INSERTION VON IMPLANTATEN**
ARRANGEMENT FOR INSERTION OF IMPLANTS
SYSTÈME D'INSERTION D'IMPLANTS

(30) Priorität: 14.12.2006 DE 202006020210 U
(43) Veröffentlichungstag der Anmeldung: 23.09.2009
(73) Patentinhaber: Dentsply Implants Manufacturing GmbH, 68229 Mannheim (DE)
(72) Erfinder: KREMER, Egbert, 63454 Hanau (DE); BIEHL, Volker, 66539 Neunkirchen (DE); SPANEL, André, 67435 Neustadt a.d. Weinstrasse (DE); CANTZLER, Philip, 68163 Mannheim (DE)
(74) Vertreter: Schmitt, Meinrad
(86) Internationale Anmeldenummer: PCT/EP2007/010741
(87) Internationale Veröffentlichungsnummer: WO 2008/071368

(56) Entgegenhaltungen:
- DE-A1-102006 059 515

## Beschreibung

Die Erfindung bezieht sich auf eine Anordnung zur Insertion von Implantaten, insbesondere Dentalimplantaten, gemäß den im Oberbegriff des Patentanspruchs 1 angegebenen Merkmalen.

Eine derartige Anordnung ist aus der FR 2 853 828 A1 bekannt, enthaltend ein Implantat mit einem Außengewinde sowie ein Werkzeug, mit welchem zur Insertion das Implantat in einen Knochen eindrehbar ist. Das Implantat enthält eine Aufnahmeöffnung mit einer zumindest teilweise konischen Innenfläche, und das Werkzeug enthält einen in die Aufnahmeöffnung des Implantats eingreifenden Zapfen mit einer konischen Außenfläche, wobei die genannten konischen Flächen aneinander liegen. Zur Verbindung des Werk-zeugs mit dem Implantat ist eine Hülse vorgesehen, welche im Verbindungsbereich das Werkzeug und das Implantat radial außen umgibt und radial nach innen gerichtete Rastelemente aufweist, welche mit zugeordneten Rastelementen sowohl des Werkzeugs als auch des Implantats im Eingriff stehen. Diese Verbindungshülse ist zumindest teilweise deformierbar und besteht beispielsweise aus Kunststoff oder aus Metall mit Schlitzen derart, dass nach der Insertion das Werkzeug und die Verbindungshülse vom Implantat entfernt werden können.

In der US 2004 / 0 175 673 A1 ist ein Dentalimplantat-System beschrieben, dessen Implantat ein Außengewinde zum Einschrauben in einen Knochen und ferner ein Innengewinde zur Befestigung einer Prothese enthält. Das Innengewinde besitzt eine Anzahl von sich in axialer Richtung erstreckenden Kerben oder Ausnehmungen, in welche ein komplementär ausgebildeter Zapfen des Werkzeugs eingreift. In der Aufnahmeöffnung des Implantats ist eine konische Innenfläche vorgesehen, an welcher eine konische Außenfläche des Werkzeugs anliegt, wobei zur Insertion über das Werkzeug eine Vorspannung eingeleitet wird.

Des Weiteren ist aus der DE 94 17 182 U1 eine Anordnung mit einem ein Außengewinde aufweisenden Implantat bekannt. Das Implantat ist als Dentalimplantat asgebildet und enthält eine vom koronalen Endbereich sich nach apikal erstreckende Aufnahmeöffnung für einen Zapfen eines mit dem Implantat nach dessen Insertion in einen Knochen, insbesondere Kiefernknochen, verbindbaren Aufbauteils. Die Aufnahmeöffnung enthält eine zum koronalen Ende sich öffnende konische Innenfläche und nach apikal anschließend ein erstes Indexierungselement in Form einer Mehrkantaufnahme sowie eine Gewindebohrung. Analog hierzu enthält der Zapfen des Aufbauteils eine konische Außenfläche sowie ein zweites Indexierungselement in Form eines Mehrkants, welcher in die Mehrkantaufnahme des Implantats einsetzbar ist. Zur Verbindung des Aufbauteils mit dem Implantat ist eine Zug- oder Halteschraube vorgesehen, welche eine Durchgangsbohrung des Aufbauteils. durchdringt und mittels eines Außengewindes in die Gewindebohrung des Implantats einschraubbar ist. Zur Insertion des Implantats in den Knochen ist ein Werkzeug mit einem Mehrkant vorgesehen, welcher auf die Mehrkantaufnahme des Implantats abgestimmt und in jene einführbar ist. Das Drehmoment zur Insertion des Implantats wird ausschließlich über die Mehrkantaufnahme übertragen und folglich besteht bei der Insertion bzw. beim Eindrehen die Gefahr, dass die als Indexierungselement ausgebildete Mehrkantaufnahme des Implantats beschädigt wird und somit die ordnungsgemäße Verbindung des Aufbauteils mit dem Implantat und vor allem die exakte Ausrichtung des Aufbauteils bezüglich des Implantats in einer vorgegebenen Drehwinkelposition in Frage gestellt ist. Das erste Indexierungselement befindet sich in einem Bereich, in welchem das Implantat außen kein Gewinde aufweist. Das Außengewinde ist in axialer Richtung zum Indexierungselement beabstandet angeordnet, und es erstreckt sich etwa von der Mitte der Längserstreckung des Implantats bis zu dessen apikalem Ende. Da das genannte Indexierungselement axial anschließend an die konische Innenfläche des Implantats vorgesehen sind, erstreckt sich die konische Innenfläche des Implantatkörpers nur über einen kleinen Teil dessen Gesamtlänge, so dass für die Konusverbindung mit dem Aufbauteil nur eine recht kleine bzw. axial kurze Verbindungsfläche zur Verfügung steht, wobei ein vergleichsweise großer Öffnungswinkel der genannten konischen Flächen vorgegeben ist.

Ferner ist aus der EP 0 707 835 B1 ein Dentalimplantat mit einer zentralen Aufnahmeöffnung bekannt, welche eine sich zum koronalen Ende öffnende konische Innenfläche und im inneren Endbereich ein Innengewinde zur Verankerung einer Zugschraube aufweist. In die Aufnahmeöffnung ist ein Zapfen eines Aufbauteils einsetzbar, in dessen Durchgangsbohrung die Zugschraube durchgreift, wobei in einem zur Mundhöhle weisenden Kopfbereich des Aufbauteils die Durchgangsbohrung eine Erweiterung zur Aufnahme eines Kopfes der Zugschraube vorgesehen ist. Der genannte Zapfen des Aufbauteils enthält eine an die konische Innenfläche der Aufnahmeöffnung angepasste Außenfläche. Die konische Innenfläche der Aufnahmeöffnung und die konische Außenfläche des Zapfens sind derart ausgebildet, dass zwischen dem Implantat und dem mittels der Zugschraube verbundenen Aufbauteil eine selbsthemmende Konusverbindung vorhanden ist. Diese form- und kraftschlüssige Konusverbindung gewährleistet eine den hohen Belastungen dauerhaft standhaltende Rotationssicherung des Aufbauteils bezüglich des Implantats. Zum Einsetzen des Implantats in den Kieferknochen enthält das Implantat im koronalen Bereich bzw. der koronalen Endfläche Eingriffselemente für ein Werkzeug, wie beispielsweise sich nach okkusal öffnende Schlitze für einen Schraubendreher. Das Aufbauteil ist zum Implantat bezüglich der Längsachse in beliebigen Drehwinkelpositionen stufenlos positionierbar, wobei insbesondere bei der für die Anfertigung einer Suprakonstruktion erforderlichen Abdrucknahme und/oder im Dentallabor besondere Maßnahmen zur winkelgetreuen Übertragung bzw. Ausrichtung des Aufbauteils bezüglich des Implantats erforderlich sind.

Weiterhin ist aus der DE 10 2005 005 402 A1 ein Dentalimplantat bekannt, enthaltend einen Implantatkörper mit einer zentralen Aufnahmeöffnung, ein Aufbauteil, welches einen in die genannte Aufnahmeöffnung eingreifenden Zapfen aufweist, sowie eine Zugschraube, welche durch eine Durchgangsbohrung des Aufbauteils hindurchgreift und nach der Insertion des Implantatkörpers in ein in der Aufnahmeöffnung vorhandenes Innengewinde eingeschraubt wird. Zur Insertion in einem Kieferknochen enthält der Implantkörper im Bereich seines koronalen Endes Einsetzelemente, wobei das Eindrehwerkzeug beispielsweise als ein Schraubendreher ausgebildet sein kann und die Einsetzelemente als Schlitze für das mit diesen in Eingriff bringbare Werkzeug ausgebildet sein können. Nach der Insertion des Implantatkörpers wird mit diesem das Aufbauteil verbunden, wobei mittels Indexelementen, welche einerseits in der Aufnahmeöffnung des Implantatkörpers und andererseits am Zapfen des Aufbauteils vorgesehen sind, die Rotationsposition des Aufbauteils bezüglich des Implantatkörpers vorgegeben wird.

Hiervon ausgehend liegt der Erfindung die Aufgabe zugrunde, die genannte Anordnung dahingehend weiterzubilden, dass in einfacher und gleichwohl funktionssicherer Weise die Insertion des Implantats durchführbar ist. Die Anordnung soll in einfacher Weise herstellbar sein und auch für sehr kleine filigrane Implantate, wie insbesondere sogenannte Mini-Implantate, einsetzbar sein. Die Insertion soll bei Vermeidung von Beschädigungen des Indexierungselements sicher durchführbar sein. Weiterhin soll die Indexierung hochpräzise sein und/oder Beschädigungen und/oder Überlastungen sollen vermieden werden.

Die Lösung dieser Aufgabe erfolgt gemäß den im Patentanspruch 1 angegebenen Merkmalen.

Die vorgeschlagene Anordnung zeichnet sich durch eine funktionsgerechte Konstruktion aus, wobei über die selbsthemmende Konusverbindung zwischen dem Eindrehwerkzeug und dem Implantat bei der Insertion desselben das Drehmoment zumindest teilweise übertragen wird. Die äußere Konusfläche des in die Aufnahmeöffnung eingreifenden Zapfens und die konische Innenfläche des Implantats sind derart aufeinander abgestimmt, dass ein vorgegebener Teil des einzuleitenden Drehmoments über die aneinander liegenden Konusflächen des Eindrehwerkzeugs und des Implantats auf dieses übertragen wird. Hierbei wird in zweckmäßiger Weise nur ein vorgebbarer Teilbereich der gesamten konischen Innenfläche des Implantats zur Drehmomentübertragung genutzt. Dieser Teilbereich ist vorteilhaft im, dem koronalen Ende des Implantats nächstliegenden, Teil der konischen Innenfläche vorgesehen. Hierzu ist der Öffnungswinkel der konischen Außenfläche des Eindrehwerkzeugs geringfügig größer vorgegeben als der Öffnungswinkel der konischen Innenfläche des Implantats und zwar derart, dass an den genannten Teilbereich nach apikal anschließend die genannten konischen Flächen praktisch nicht mehr aneinander liegen und/oder zur Drehmomentübertragung keinen Beitrag liefern. Alternativ kann der konische Teil des Zapfens, soweit dieser in die Aufnahmeöffnung eingreift, kürzer als die Gesamtlänge der konischen Innenfläche sein, wobei die Öffnungswinkel der aneinander liegenden Konusflächen im Wesentlichen identisch sind. Schließlich kann erfindungsgemäß der Öffnungswinkel der konischen Außenfläche des Eindrehwerkzeugs geringfügig kleiner sein als der Öffnungswinkel der konischen Innenfläche, so dass der Teilbereich der Anlage bevorzugt beabstandet zur koronalen Endfläche des Implantats sich befindet. Es ist somit ein vorgebbarer bzw. einstellbarer Anteil der Übertragung des Drehmoments durch Variation der Klemmfläche im genannten Teilbereich bzw. dessen Größe vorgegeben, wobei der restliche Teil der konischen Innenfläche des Implantats frei bzw. außer Klemmung mit dem Eindrehwerkzeug bzw. dessen Außenkonus bleibt. Der Restanteil des einzuleitenden Drehmoments wird in zweckmäßiger Weise durch andere Elemente aufgenommen, insbesondere mittels der ineinander greifenden Indexelemente des Eindrehwerkzeugs und des Implantats oder einer Verklemmung bzw. einem Anlaufen einer entsprechenden Anlauffläche des Eindrehwerkzeugs an der Oberkante bzw. der koronalen Endlfäche des Implantats oder einer Verklemmung bzw. Verspannung des Eindrehwerkzeugs mit dem Implantat mittels eines Schraubgewindes.

Das Eindrehwerkzeug ist mit dem Implantat werkseitig verbunden und/oder definiert vorgespannt, und zwar mittels einer Zugschraube, welche durch eine Durchgangsbohrung des Eindrehwerkzeugs durchgreift und mit einem Gewinde in ein in der Aufnahmeöffnung des Implantats angeordnetes Innengewinde eingeschraubt ist. Das Eindrehwerkzeug ist vorteilhaft mit dem Implantat vormontiert und/oder als Eindrehpfosten ausgebildet und enthält ein außerhalb des Implantats vorgesehenes Kopfteil für ein weiteres Werkzeug oder Instrument, wie Winkelstück oder Ratsche. Weiterhin kann das Eindrehwerkzeug als separates Instrument für ein Winkelstück oder bei Ausführung als vormontierter Eindrehpfosten mit Winkelstückanschluß ausgebildet sein. Das Kopfteil des Eindrehwerkzeugs besitzt vorteilhaft wenigstens eine Angriffsfläche für das geeignete Werkzeug oder Instrument, wie Ratsche oder dergleichen. Des Weiteren kann das Kopfteil in bevorzugter Weise für einen temporären Aufbau, wie eine Krone, ausgebildet sein oder als solcher verwendet werden.

Aufgrund der erfindungsgemäßen Ausbildung und Anordnung des Eindrehwerkzeugs in Kombination mit dem Implantat und/oder der zumindest teilweisen Übertragbarkeit des Drehmoments über die selbsthemmende Konusverbindung zwischen dem Eindrehwerkzeug und dem Implantat wird dessen hochpräzises Indexelement mit hoher Sicherheit beim Eindrehen nicht beschädigt. Das Indexelement kann somit vergleichsweise platzsparend bzw. mit geringem Bauvolumen ausgebildet sein, wobei in zweckmäßiger Weise eine Beschädigung die Folge einer Überlastung vermieden wird. Dies ist von besonderer Bedeutung im Hinblick auf immer kleiner und filigraner werdende Implantatgrößen und/oder Implantatformen. Aufgrund der Nutzung der Konusklemmung zwischen dem Eindrehwerkzeug und dem Implantat wird das Indexierungselement zuverlässig geschützt, wobei in vorteilhafter Weise eine Abstimmung bzw. Aufteilung des über die Konus- bzw. Klemmflächen zu übertragenden Drehmomentanteils problemlos vorgebbar ist. Die Präzision für die Rotationssicherung des nach der Insertion mit dem Implantat zu verbindenden Aufbauteils wird mit hoher Sicherheit vorgegeben, da das Indexelement des Implantats bei der Insertion nicht geschädigt wird. Es sei hier festgehalten, dass die über das Aufbauteil und/oder die prothetische Versorgung einwirkenden Rotationskräfte deutlich geringer sind als das auf das Implantat einzuleitenden Drehmomente bei dessen Insertion. Ferner sei ausdrücklich darauf hingewiesen, dass die Anordnung im Rahmen der Erfindung Implantate mit oder ohne Indexierungselemente umfaßt und ferner das Eindrehwerkzeug korrespondierende Indexierungselemente aufweist oder aber nicht aufweist. Sofern das Eindrehwerkzeug Indexierungselemente aufweist, können diese bevorzugt derart ausgebildet und/oder angeordnet sein, dass das Eindrehwerkzeug mit Implantaten verwendbar und/oder in Eingriff bringbar ist, welche Indexierungselemente aufweisen oder aber keine Indexierungselemente enthalten.

Da erfindungsgemäß nur ein Teilbereich der konischen Innenfläche des Implantats zur Drehmomentübertragung genutzt wird, wird in besonders zweckmäßiger Weise ein unerwünschtes "Festfressen" des Eindrehwerkzeugs bzw. dessen konischer Außenfläche bezüglich des Implantats vermieden und somit ist nach der Insertion des Implantats das erforderliche Lösen und Entfernen des Eindrehwerkzeugs vom Implantat problemlos sichergestellt. Weiterhin hat es sich als besonders zweckmäßig erwiesen, das Eindrehwerkzeug mit dem Implantat werkseitig bei der Fertigung mit einer vorgegebenen Vorspannung miteinander zu verspannen. Wird bei der Insertion des Implantats ein derart vorgegebener Grenzwert des einzuleitenden Drehmoments überschritten, so kann das Eindrehwerkzeug bezüglich des Implantats derart verdreht werden, dass es an den vorstehen erläuterten anderen Elementen zur zur Anlage gelangt. Zudem ist in bevorzugter Weise die selbstklemmende Konusverbindung dahingehend ausgebildet, dass bei Überschreiten des vorgegebenen Grenzwertes des Drehmoments und/oder bei der Relativdrehung des Adapaters bezüglich des Implantats dessen Konusfläche nicht beschädigt wird. Insoweit sind insbesondere der Reibungskoeffizient und/oder die Rauhigkeit der Konusfläche des Zapfens des Eindrehwerkzeugs um einen vorgegebenen Wert erfindungsgemäß geringer ausgebildet als der Reibungskoeffizient und/oder die Rauigkeit der Konusfläche und/oder der Innenfläche des Implantats. Dieser Wert ist mit insbesondere 10%, vorteilhaft 25%, bevorzugt 35% kleiner vorgegeben. Ferner ist der Wert mit insbesondere maximal 90%, vorteilhaft 70%, bevorzugt 35% vorgegeben.

Gemäß der Erfindung ist die Anordnung ein Implantatsystem, enthaltend das Implantat die Zugschraube, das Eindrehwerkzeug sowie das Aufbauteil, wobei der Zapfen des Eindrehwerkzeugs und insbesondere dessen konische Außenfläche übereinstimmend ausgebildet ist mit dem Zapfen des Aufbauteils. Bei diesem Implantatsystem ist der Zapfen des Aufbauteils in bevorzugter Weise im Wesentlichen gleich ausgebildet wie der Zapfen des Eindrehwerkzeugs. Weiterhin ist die Zugschraube zur Verbindung des Eindrehwerkzeugs mit dem Implantat in vorteilhafter Weise übereinstimmend ausgebildet mit der für die Verbindung des Aufbauteils mit dem Implantat vorgesehene Zugschraube, wodurch insbesondere der Aufwand für die Fertigung und/oder Bereitstellung der genannten Zugschraube reduziert wird. Dies gilt gleichermaßen für die mit dem freien Ende der Zugschraube zu verbindende und/oder verbundene Gewindehülse. Bei dem erfindungsgemäßen Implantatsystem werden in bevorzugter Weise das Implantat und das Eindrehwerkzeug werksseitig und/oder mit definierter und/oder vorgegebener Vorspannung miteinander verbunden. Nach der Insertion des Implantats in einen Knochen wird die Verbindung gelöst, und nachfolgend wird das Aufbauteil mit dem Zapfen in die Aufnahmeöffnung des Implantats eingesetzt und schließlich wird mittels der Zugschraube die selbsthemmende Konusverbindung des Aufbauteils mit dem Implantat hergestellt.

Besondere Ausgestaltungen und Weiterbildungen der Erfindung sind in den Unteransprüchen und der nachfolgenden Beschreibung eines bevorzugten Ausführungsbeispiels der Anordnung gegeben.

Die Erfindung wird nachfolgend anhand eines besonderen Ausführungsbeispiels näher erläutert, ohne dass insoweit eine Beschränkung erfolgt. Es zeigen:
- Fig. 1: eine Seitenansicht der Anordnung,
- Fig. 2: die Anordnung in einem Längsschnitt entlang Schnittlinie B gemäß Fig. 1,
- Fig. 3: einen Schnitt der Anordnung in der Schnittebene C gemäß Fig. 2,
- Fig. 4: eine explosionsartige Darstellung der Anordnung,
- Fig. 5, 6: das Eindrehwerkzeug in einer Seitenansicht bzw. in perspektivischer Darstellung,
- Fig. 7, 8: das Implantat in der Schnittebene gemäß Fig. 2 bzw. in perspektivischer Darstellung.

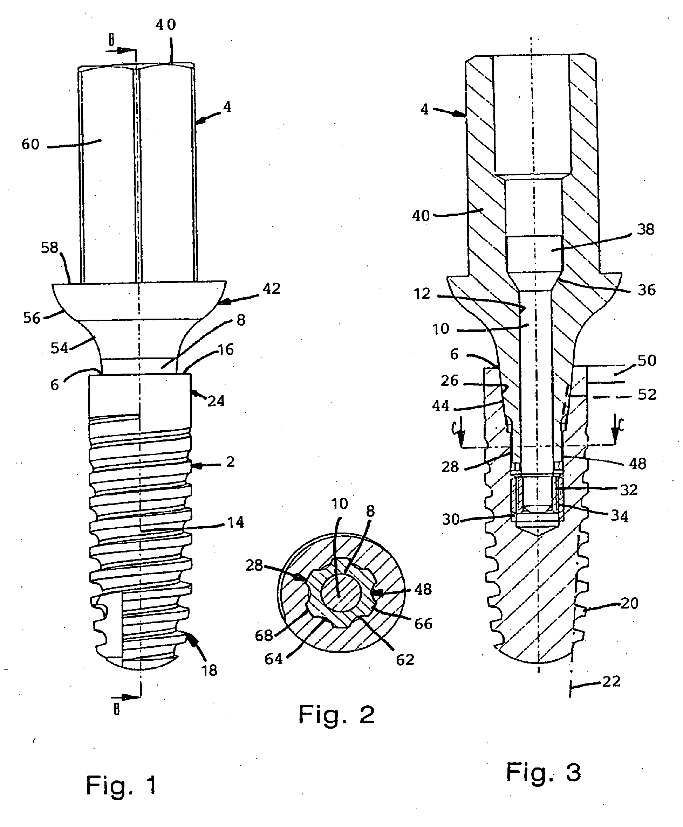

Gemäß Fig. 1 bis 3 enthält die Anordnung das Implantat 2 und das Eindrehwerkzeug 4, wobei in eine Aufnahmeöffnung 6 des Implantats das Eindrehwerkzeug 4 mit einem Zapfen 8 eingreift. Mit dem Implantat 2 ist das Eindrehwerkzeug 4 mittels einer Zugschraube 10 verbunden, welche in einer zentralen Durchgangsbohrung 12 des Eindrehwerkzeugs 4 im wesentlichen koaxial zur Längsachse 14 des Implantats 2 angeordnet ist. Die Aufnahmeöffnung 6 verläuft von einer koronalen Endfläche 16 des Implantats 2 in Richtung zu dessen apikalen Endbereich 18 und ist grundsätzlich als Sackbohrung ausgebildet. Das Implantat 2 enthält ferner ein Außengewinde 20, welches zumindest im apikalen Endbereich 18 bevorzugt selbstschneidend ausgebildet ist und/oder welches einen mittels strichpunktierter Linie angedeuteten und zum apikalen Endbereich 8 sich verjüngenden konischen Gewindekern 22 aufweist. Im koronalen Endbereich 24 des Implantats 2 enthält die Aufnahmeöffnung 6 eine zur koronalen Endfläche 16 hin sich öffnende konische Innenfläche 26. Weiterhin enthält das Implantat 2 nach apikal anschließend und teilweise in die konische Innenfläche 26 eingreifend ein erstes Indexierungselement 28. Im Endbereich der insbesondere als Sackbohrung ausgebildeten Aufnahmeöffnung 6 ist ein Innengewinde 30 vorgesehen, in welches die Zugschraube 10 mit einem Außengewinde 32 eingreift bzw. eingeschraubt ist. In vorteilhafter Weise ist das Außengewinde 32 auf einer Gewindehülse 34 angeordnet, welche mit dem inneren Ende der Zugschraube 10, insbesondere durch Schweißen oder Kleben, fest verbunden ist. Wie aus Fig. 2 ersichtlich, ist der Außendurchmesser der Gewindehülse 34 größer vorgegeben, als der Durchmesser der Durchgangsbohrung 12, so dass das Eindrehwerkzeug 4 entsprechend klein bzw. mit einem entsprechend geringen Außendurchmesser ausgebildet ist. In der Durchgangsbohrung 12 ist eine bevorzugt konisch ausgebildete Anlagefläche 36 vorgesehen, an welcher der Schraubenkopf 38 der Zugschraube 10 anliegt. Mittels der Zugschraube 10 ist das Eindrehwerkzeug 4 mit dem Implantat mit vorgegebener Vorspannung lösbar verbunden.

Das Eindrehwerkzeug 4 enthält ein Kopfteil 40, nach apikal bzw. in Richtung zum Implantat anschließend ein Zwischenteil 42 und daran anschließend den bereits erwähnten Zapfen 8. Der teilweise in die Aufnahmeöffnung 6 eingreifende Eindrehwerkzeug bzw. dessen Zapfen 8 enthält eine konische Außenfläche 44, welche an die konische Innenfläche 26 des Implantats angepaßt und/oder auf diese abgestimmt ist. Die Öffnungswinkel der konischen Flächen 26 und 44 sind insbesondere unter Berücksichtigung deren Reibungskoeffizienten und/oder deren Oberflächenbeschaffenheit und/oder der Rauhigkeit und/oder der Größe der aneinander liegenden Flächenbereiche, derart vorgegeben, dass das Eindrehwerkzeug 4 aufgrund konischer Selbsthemmung bezüglich des Implantats 2 festgelegt ist, wobei mittels der Zugschraube 10 eine definierte Verspannung des Eindrehwerkzeugs 4 mit dem Implantat 2 vorgegeben ist. Das Eindrehwerkzeug 4 und/oder dessen Zapfen 8 enthält ein weiteres Indexierungselement 48, welches korrespondierend zum ersten Indexierungselement 28 des Implantats 2 ausgebildet ist und in dieses eingreift, wie aus Fig. 3 ersichtlich.

In bevorzugter Weise ist das Eindrehwerkzeug 4 bzw. dessen Zapfen 8 derart ausgebildet, dass die konische Außenfläche 44 nur in einem Teilbereich 50 an der konischen Innenfläche 26 des Implantats 2 unter Vorspannung und/oder mit Selbsthemmung anliegt. Vorteilhaft ist der Teilbereich 50 nächstliegend zur koronalen Endfläche 16 angeordnet, während nach apikal zwischen der konischen Innenfläche 26 und dem Zapfen 8 keine für die selbsthemmende konische Verbindung wirksame Anlage vorhanden ist. Hierzu kann insbesondere der Öffnungswinkel der konischen Außenfläche 44 des Zapfens 8 um einen vorgegebenen Wert größer oder kleiner vorgegeben sein als der Öffnungswinkel der konischen Innenfläche 26. Ferner kann, wie mit gestrichelter Linie 52 stark vergrößert angedeutet, nach apikal an den Teilbereich 50 anschließend der Durchmesser des Zapfens 8 reduziert ausgebildet sein. Im Rahmen der Erfindung kann alternativ der Teilbereich dem Bereich des apikalen Endes oder sofern dort Indexierungselemente sind, bevorzugt an diese nach occlusal anschließend am Zapfen des Eindrehwerkzeugs angeordnet sein. Dies ist insoweit von Bedeutung, als der an die koronale Endfläche 16 des Implantats 2 anschließende Teil der konischen Innenfläche 26 nach der Insertion des Implantats 2 und erfolgter Verbindung des Aufbauteils zum dichten Verschluss mit dem Zapfen des Aufbauteils genutzt wird und/oder vorgesehen ist. Eine Beschädigung der am koronalen Ende vorhandenen konischen Innenfläche des Implantats bei der Insertion wird somit zuverlässig vermieden.

Das Zwischenteil 42 des Eindrehwerkzeugs 4 ist bevorzugt als eine im Anschluss an den konischen Zapfen vorgesehene Erweiterung des Eindrehwerkzeugs 4 ausgebildet, wobei im Wesentlichen anschließend an die konische Außenfläche 44 ein konkaver Bereich 54 und danach anschließend ein konvexer Bereich 56 des Zwischenteils 42 vorhanden sind. Das Kopfteil 40 weist einen gegenüber der Erweiterung 42 und insbesondere deren konvexen Bereich 56 reduzierten Außendurchmesser auf, wobei die Erweiterung 42 in bevorzugter Weise einen Ringbund mit einer Auflagefläche 58 bildet. Das Kopfteil 40 des Eindrehwerkzeugs 2 enthält Angriffsflächen 60 für ein Instrument, wie z.B. eine Ratsche, wobei die Angriffsfläche 60 hier beispielshaft als Sechskant ausgebildet ist. Durch die Auflagefläche 58 ist eine sichere Führung und Festlegung des genannten Instruments erreicht und das Abrutschen des Instruments oder gar Verletzungen des Patienten werden vermieden. Das Kopfteil 40 ist im Rahmen der Erfindung ferner für die Anordnung eines temporären Aufbaus, beispielsweise einer Krone, ausgebildet, welche nach der Insertion des Implantats mittels des Eindrehwerkzeugs 4 mit dem Kopfteil 40 in geeigneter Weise verbunden wird und vorteilhaft an der Anlagefläche 58 der Erweiterung 42 anschließend angeordnet und/oder auf dieser abgestützt ist. Darüber hinaus hat es sich als besonders zweckmäßig erwiesen, die vorteilhaft konische Anlagefläche 36 für den Schraubenkopf 38 zumindest näherungsweise, zweckmäßig vollständig in der Erweiterung 42 vorzusehen, wodurch eine hinreichend große Wandstärke des Eindrehwerkzeugs und somit eine sichere Einleitung der über den Schraubenkopf 38mittels der Zugschraube 10 aufgebrachten Vorspannkraft erreicht ist. Erfindungsgemäß ist die Vorspannkraft werkseitig definiert vorgegeben und der Adapter 4 ist mit dem Implantat 2 mittels der Zugschraube 10 lösbar verbunden.

Das Kopfteil 40 des Eindrehwerkzeugs 4 gemäß der Erfindung ist als ein Bolzen ausgebildet, dessen Außenfläche die wenigstens eine Angriffsfläche für das weitere Werkzeug oder Instrument aufweist. Das Kopfteil und/oder der Bolzen 40 weist eine unrunde Außenfläche auf und/oder einen bevorzugt über die gesamte Länge im wesentlichen gleichbleibenden Querschnitt. Insbesondere ist der Bolzen 40 als ein Mehrkant mit der wenigstens einen Angriffsfläche 60 ausgebildet. Bevorzugt weist das Kopfteil bzw. der Bolzen n+1 Angriffsflächen 60 auf, wobei n eine ganze Zahl ist, und/oder die Angriffsflächen 60 sind über den Umfang gleichmäßig verteilt angeordnet. Die Ausbildung des Bolzens 4 mit einem polygonalen Querschnitt mit wenigstens drei Außenflächen ist für das Ansetzen des weiteren Werkzeugs oder Instruments vorteilhaft, wobei ein Vierkant oder, wie dargestellt, ein Sechskant sich als besonders zweckmäßig erwiesen haben:

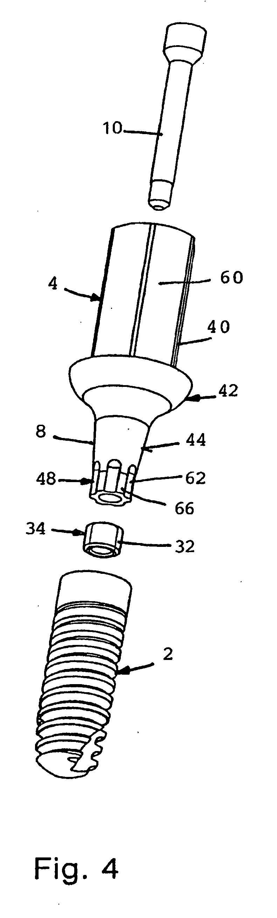

Fig. 4 zeigt in explosionsartiger Darstellung die Anordnung mit dem Implantat 2, dem Eindrehwerkzeug 4 und der Zugschraube 10, mit welcher nach dem Einführen in das Eindrehwerkzeug 4 die das Außengewinde 32 aufweisende Gewindehülse 34 fest verbunden ist. Das im Anschluss an die konische Außenfläche 44 des Eindrehwerkzeugs 4 vorgesehene weitere Indexierungselement 48 enthält axiale Nuten 62. Wie in Verbindung mit Fig. 3 ersichtlich, greifen in diese axialen Nuten 62 des Eindrehwerkzeugs 4 bzw. dessen Zapfen 8 radiale Vorsprünge oder Nocken 64 des ersten Indexierungselements 28 des Implantats 2 ein. Die Indexierungselemente 28 und 48 sind nach Art einer aufeinander abgestimmten und ineinander greifenden Axialverzahnung ausgebildet.

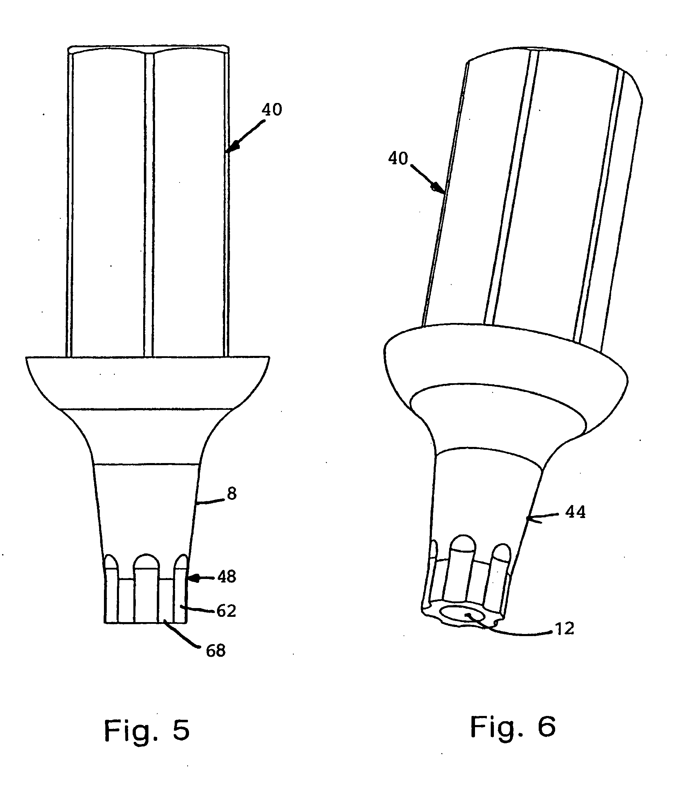

Fig. 5 und 6 zeigen vergrößert das Eindrehwerkzeug 4, welches das Kopfteil 40 mit den Angriffsflächen 60, die Erweiterung 42 und ferner den Zapfen 8 mit der konischen Außenfläche 44 und schließlich das weitere Indexierungselement 48 mit den in radialer Richtung verlaufenden Nuten 62 enthält. In Umfangsrichtung zwischen den Nuten 62 sind somit Stege 66 vorhanden, welche nach dem Einstecken des Zapfens 8 in korrespondierende Nuten des ersten Indexierungselements des Implantats eingreifen.

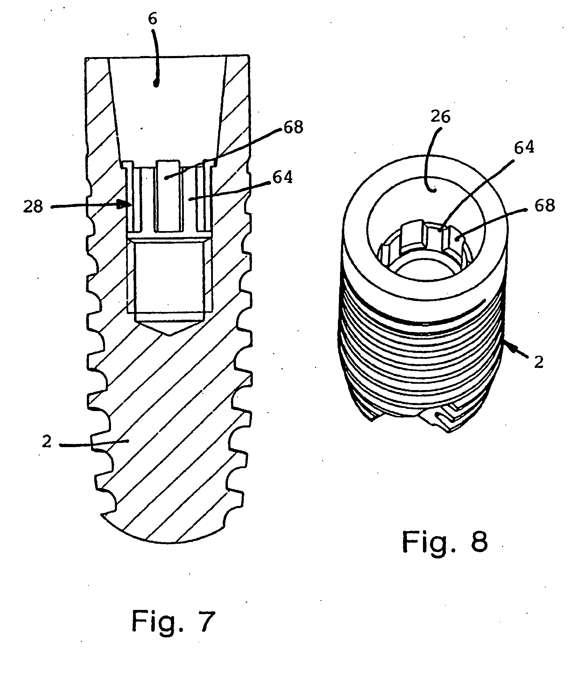

Fig. 7 bzw. 8 zeigen in einem axialen Schnitt bzw. in perspektivischer Darstellung das Implantat 2 mit der Aufnahmeöffnung 6. Die Aufnahmeöffnung enthält im koronalen Endbereich 24 die konische Innenfläche 26 und ferner nach apikal das erste Indexierungselement 28 mit den in radialer Richtung nach innen gerichteten Nocken 64. In Umfangsrichtung zwischen den Nocken 64 befinden sich die bereits erwähnten Nuten 68.

### Bezugszeichen

- 2: Implantat
- 4: Eindrehwerkzeug
- 6: Aufnahmeöffnung von 2
- 8: Zapfen von 4
- 10: Zugschraube
- 12: Durchgangsbohrung in 4
- 14: Längsachse von 2
- 16: koronale Endfläche von 2
- 18: apikaler Endbereich von 2
- 20: Außengewinde von 2
- 22: konischer Gewindekern
- 24: koronaler Endbereich von 2
- 26: konische Innenfläche von 6
- 28: erstes Indexierungselement
- 30: Innengewinde von 6
- 32: Außengewinde von 10
- 34: Gewindehülse
- 36: Anlagefläche von 12
- 38: Schraubenkopf von 10
- 40: Kopfteil Bolzen von 4
- 42: Zwischenteil / Erweiterung von 4
- 44: konische Außenfläche von 8
- 48: weiteres Indexierungselement
- 50: Teilbereich von 44
- 52: gestrichelte Linie / Durchmesserreduzierung von 8
- 54: konkaver Bereich von 42
- 56: konvexer Bereich von 42
- 58: Auflagefläche
- 60: Angriffsfläche
- 62: axiale Nut von 48
- 64: radialer Nocken von 28
- 66: Steg von 48
- 68: Nut von 28

## Patentansprüche

1. Anordnung, enthaltend ein Implantat (2), insbesondere ein Dentalimplantat, eine Zugschraube (10) und ein Eindrehwerkzeug (4), mittels welchem zur Insertion das ein Außengewinde (20) aufweisende Implantat (2) in einen Knochen eindrehbar ist, wobei das Implantat (2) eine Aufnahmeöffnung (6) mit einer zumindest teilweise konischen Innenfläche (26) aufweist, wobei in die Aufnahmeöffnung ein Zapfen eines mit dem Implantat (2) nach dessen Insertion verbindbaren Aufbauteils einsetzbar ist, wobei das Eindrehwerkzeug (4) einen in die Aufnahmeöffnung (6) des Implantats (2) eingreifenden Zapfen (8) mit einer konischen Außenfläche (44) sowie ein Kopfteil (40) mit wenigstens einer Angriffsfläche (60) für ein weiteres Werkzeug oder ein Instrument aufweist, wobei die konische Außenfläche (44) korrespondierend zur konischen Innenfläche (26) des Implantats (2) ausgebildet ist und unter Vorspannung zumindest teilweise an dieser derart anliegt, dass zumindest ein vorgegebener Teil des zum Eindrehen des Implantats (2) erforderlichen Drehmoments über die selbsthemmende Konusverbindung des Eindrehwerkzeugs (4) mit dem Implantat (2) übertragbar ist,
**dadurch gekennzeichnet, dass** das Eindrehwerkzeug (4) mit dem Implantat (2) mittels der Zugschraube (10) lösbar verbunden ist, welche eine Durchgangsbohrung (12) des Eindrehwerkzeugs (4) durchdringt und mit einem Außengewinde (32) in ein Innengewinde (30) der Aufnahmeöffnung (6) des Implantats (2) eingeschraubt ist,
dass mittels der Zugschraube (10) die definierte Vorspannung der zumindest teilweise aneinander liegenden konischen Innenfläche (26) des Implantats (2) und der konischen Außenfläche (44) des Zapfens vorgegeben ist
und dass die Durchgangsbohrung (12) des Eindrehwerkzeugs (4) eine Anlagefläche (36) für einen Schraubenkopf (38) der Zugschraube (10) enthält.

2. Anordnung nach Anspruch 1, **dadurch gekennzeichnet, dass** das Außengewinde (32) auf einer mit der Zugschraube (10) fest verbundenen Gewindehülse (34) vorgesehen ist.

3. Anordnung nach einem der Ansprüche 1 oder 2, **dadurch gekennzeichnet, dass** die Anlagefläche (36) zumindest teilweise im Bereich eines als radiale Erweiterung ausgebildeten Zwischenteils (42) des Eindrehwerkzeugs (4) angeordnet ist.

4. Anordnung nach einem der Ansprüche 1 bis 3, **dadurch gekennzeichnet, dass** die konische Außenfläche (44) des Zapfens (8) mit einem vorgegebenen Teilbereich (50) an der konischen Innenfläche (26) des Implantats (2) anliegt und/oder dass dieser Teilbereich (50) bevorzugt der koronalen Endfläche (16) des Implantats (2) zugeordnet und/oder benachbart zu dieser oder in einem vorgegebenen Abstand von dieser angeordnet ist.

5. Anordnung nach einem der Ansprüche 1 bis 4, **dadurch gekennzeichnet, dass** das Drehmoment teilweise über die selbsthemmende Konusverbindung der konischen Innenfläche (26) und der konischen Außenfläche (44) übertragbar ist und dass ein weiterer Teil des Drehmoments über weitere Elemente, wie insbesondere Indexierungselemente (28, 48) oder miteinander korrespondierende Anlage- oder Auflageflächen von Eindrehwerkzeug (4) und Implantat (2) übertragbar ist.

6. Anordnung nach einem der Ansprüche 1 bis 5, **dadurch gekennzeichnet, dass** mittels der Zugschraube (10) ein Grenzwert des Drehmoments definiert vorgegeben ist und dass bei Überschreiten des Grenzwertes in Kombination mit weiteren Elementen des Eindrehwerkzeugs (4) sowie korrespondierenden Elementen des Implantats (2) das Drehmoment übertragbar ist.

7. Anordnung nach einem der Ansprüche 1 bis 6, **dadurch gekennzeichnet, dass** das Kopfteil (40) als Aufnahmeelement eines temporären Aufbaus vorgesehen ist oder als solcher ausgebildet ist.

8. Anordnung nach einem der Ansprüche 1 bis 7, **dadurch gekennzeichnet, dass** das Kopfteil als ein Bolzen (40) ausgebildet ist und/oder über die gesamte Länge einen im Wesentlichen gleichbleibenden Querschnitt aufweist und/oder als ein Mehrkant mit polygonalem Querschnitt ausgebildet ist und/oder dass wenigstens zwei Angriffsflächen (60) über den Umfang des Kopfteils (40) gleichmäßig verteilt angeordnet sind.

9. Anordnung nach einem der Ansprüche 1 bis 8, **dadurch gekennzeichnet, dass** zwischen dem Kopfteil (40) und dem Zapfen (8) das Eindrehwerkzeug (4) ein Zwischenteil (42) aufweist, welches insbesondere als eine radiale Erweiterung ausgebildet ist und/oder welches bevorzugt an den Zapfen (8) anschließend, einen konkaven Bereich (54) und ferner in Richtung zum Kopfteil (40) einen konvexen Außenbereich (56) der Außenfläche aufweist und/oder dass das Zwischenteil (42) im Übergangsbereich zum Kopfteil oder Bolzen (40) einen größeren Außendurchmesser als das Kopfteil oder der Bolzen (40) aufweist und/oder dass das Zwischenteil (42) in Richtung zum Kopfteil oder Bolzen (40) eine sich bevorzugt in radialer Richtung erstreckende Auflagefläche (58) aufweist.

10. Anordnung nach einem der Ansprüche 1 bis 9, **dadurch gekennzeichnet, dass** das Implantat (2) wenigstens ein erstes Indexierungselement (28) aufweist, mit welchem ein zweites korrespondierendes Indexierungselement eines Aufbauteils zur Vorgabe einer definierten Drehwinkelposition in Eingriff bringbar ist und/oder dass das Eindrehwerkzeug (4) ein weiteres Indexierungselement (48) aufweist, welches korrespondierend zum ersten Indexierungselement (28) des Implantats (2) ausgebildet ist und in jenes eingreift.

## Claims

1. An arrangement comprising an implant (2), in particular a dental implant, a tension screw (10) and an screwing tool (4) by means of which the implant (2) having an external thread (20) can be inserted into a bone, wherein the implant (2) has a receiving opening (6) having an at least partially conical internal surface (26), wherein a pin of an abutment can be connected to the implant (2) after its insertion and can be inserted into the receiving opening (6), wherein the screwing tool (4) has a pin (8) with a conical exterior surface (44) that engages with the receiving opening (6) of the implant (2) and also has a head part (40) having at least one support surface (60) for another tool or an instrument, wherein the conical exterior surface (44) is designed to correspond to the conical interior surface (26) of the implant (2) and is in at least partial contact with same under prestress, such that at least one predefined part of the torque required to insert the implant (2) can be transferred to the implant (2) via the self-locking cone joint of the screwing tool (4),
**characterized in that**
the screwing tool (4) is releasably connected to the implant (2) by means of the tension screw (10), which penetrates through a through-hole (12) in the screwing tool (4) and is screwed by an external thread (32) into an internal thread (30) of the receiving opening (6) of the implant (2),
the defined prestress of the at least partially mutually contacting conical interior surface (26) of the implant (2) and of the conical exterior surface (44) of the pin is predefined by means of the tension screw (10),
and the through-hole (12) of the screwing tool (4) includes a support surface (36) for a screw head (38) of the tension screw (10).

2. The arrangement according to Claim 1,
**characterized in that**
the external thread (32) is provided on a threaded sleeve (34) that is fixedly connected to the tension screw (10).

3. The arrangement according to any one of Claims 1 or 2,
**characterized in that**
the support surface (36) is at disposed least partially in the region of an intermediate part (42) of the screwing tool (4) designed as a radial enlargement.

4. The arrangement according to any one of Claims 1 to 3,
**characterized in that**
the conical exterior surface (44) of the pin (8) is in contact in a predefined partial region (50) with the conical internal surface (26) of the implant (2) and/or this partial region (50) is preferably assigned to the coronal end surface (16) of the implant (2) and/or is arranged adjacent to the latter or is arranged at a predefined distance from the latter.

5. The arrangement according to any one of Claims 1 to 4,
**characterized in that**
the torque can be transferred in part by way of the self-locking cone joint of the conical interior surface (26) and of the conical exterior surface (44), and another part of the torque can be transferred by means of additional elements, such as indexing elements (28, 48) in particular or corresponding contact surfaces or supporting surfaces of the screwing tool (4) and the implant (2).

6. The arrangement according to any one of Claims 1 to 5,
**characterized in that**
a limit value of the torque is predetermined in a defined way by means of the tension screw (10), and the torque can be transferred on exceeding the limit value in combination with other elements of the screwing tool (4) as well as corresponding elements of the implant (2).

7. The arrangement according to any one of Claims 1 to 6,
**characterized in that**
the head part (40) is provided as a receiving element of a temporary add-on structure or is designed as such.

8. The arrangement according to any one of Claims 1 to 7,
**characterized in that**
the head part is designed as a bolt (40) and/or has an essentially uniform cross section over the entire length and/or is designed as a polygon having a polygonal cross section and/or at least two support surfaces (60) are arranged so that they are uniformly distributed over the circumference of the head part (40).

9. The arrangement according to any one of Claims 1 to 8,
**characterized in that**
between the head part (40) and the pin (8), the screwing tool (4) has an intermediate part (42), which is designed as a radial extension in particular and/or has a concave region (54), preferably connected to the pin (8), and also has a convex exterior region (56) of the exterior surface in the direction toward the head part (40) and/or the intermediate part (42) has a larger outside diameter than the head part or the bolt (40) in the transitional region to the head part or the bolt (40) and/or the intermediate part (42) has, in the direction toward the head part or the bolt (40), a support surface (58) extending preferably in the radial direction.

10. The arrangement according to any one of Claims 1 to 9,
**characterized in that**
the implant (2) has at least one first indexing element (28) with which a second corresponding indexing element (28) of an abutment can be brought into engagement for presetting a defined rotational angle position and/or the screwing tool (4) has another indexing element (48), which is designed to correspond to the first indexing element (28) of the implant (2) and engages with each.

## Revendications

1. Système, comprenant un implant (2), en particulier un implant dentaire, une vis de traction (10) et un outil de vissage (4), au moyen duquel, pour l'insérer, un implant (2) présentant un filetage extérieur (20) peut être vissé dans un os, l'implant (2) présentant un orifice récepteur (6) ayant une surface intérieure du moins partiellement conique (26), un tourillon d'une pièce rapportée pouvant être raccordée à l'implant (2) après son insertion pouvant être inséré dans l'orifice récepteur, l'outil de vissage (4) présentant un tourillon (8) s'engrenant dans l'orifice récepteur (6) de l'implant (2) par une surface extérieure conique (44), et une pièce sommitale (40) dotée d'au moins une surface d'attaque (60) pour un autre outil ou un instrument, la surface extérieure conique (44) étant conformée de manière à correspondre avec la surface intérieure conique (26) de l'implant (2) et reposant sous précontrainte du moins partiellement sur celle-ci de manière à ce qu'au moins une partie prédéfinie du couple de serrage nécessaire au vissage de l'implant (2) soit transférable via la liaison conique autobloquante de l'outil de vissage (4) avec l'implant (2),
**caractérisé en ce que** l'outil de vissage (4) est relié à l'implant (2) de manière dissociable par la vis de traction (10) qui traverse un trou traversant (12) de l'outil de vissage (4) et est vissée par un filetage extérieur (32) dans un filetage intérieur (30) de l'orifice récepteur (6) de l'implant (2),
que, au moyen de la vis de traction (10), est prédéfinie la précontrainte définie des surfaces intérieures coniques au moins en partie superposées (26) de l'implant (2) et de la surface extérieure conique (44) du tourillon
et que le trou traversant (12) de l'outil de vissage (4) comporte une surface d'appui (36) pour une tête de vis (38) de la vis de traction (10).

2. Système selon la revendication 1, **caractérisé en ce que** le filetage extérieur (32) est prévu sur une douille filetée (34) reliée fixement à la vis de traction (10).

3. Système selon une des revendications 1 ou 2, **caractérisé en ce que** la surface d'appui (36) est disposée du moins partiellement au niveau d'une partie intermédiaire (42) réalisée sous forme d'un élargissement radial de l'outil de vissage (4).

4. Système selon une des revendications 1 à 3, **caractérisé en ce que** la surface extérieure conique (44) du tourillon (8) est en contact avec une zone partielle (50) de la surface intérieure conique (26) de l'implant (2) et/ou que cette zone partielle (50) est de préférence affectée à la surface coronaire terminale (16) de l'implant (2) et/ou est disposée à proximité de celle-ci ou à une distance prédéfinie de celle-ci.

5. Système selon une des revendications 1 à 4, **caractérisé en ce que** le couple de serrage est transmissible partiellement via la liaison conique autobloquante de la surface intérieure conique (26) et de la surface extérieure conique (44) et qu'une autre partie du couple de serrage est transmissible via d'autres éléments, comme en particulier des éléments d'indexation (26, 48) ou des surfaces de contact ou d'appui se correspondant mutuellement de l'outil de vissage (4) et de l'implant (2).

6. Système selon une des revendications 1 à 5, **caractérisé en ce qu'**il est prédéfini au moyen de la vis de traction (10) une valeur limite de couple de serrage et que, en cas de dépassement de la valeur limite, le couple de serrage est transmissible en combinaison avec d'autres éléments de l'outil de serrage (4) et des éléments correspondants de l'implant (2).

7. Système selon une des revendications 1 à 6, **caractérisé en ce que** la partie sommitale (40) est prévue sous forme d'un élément récepteur d'une pièce rapportée temporaire ou est réalisée en tant que telle.

8. Système selon une des revendications 1 à 7, **caractérisé en ce que** la partie sommitale (40) est réalisée sous forme d'un goujon (40) et/ou présente sur toute sa longueur une section transversale sensiblement constante et/ou est réalisée sous forme d'un polygone à section transversale polygonale et/ou qu'au moins deux surfaces d'attaque (80) sont disposées réparties régulièrement sur la circonférence de la partie sommitale (40).

9. Système selon une des revendications 1 à 8, **caractérisé en ce que**, entre la partie sommitale (40) et le goujon (40), l'outil de vissage (4) présente une partie intermédiaire (42) qui est réalisée en particulier sous forme d'un élargissement radial et/ou qui présente de préférence à la suite du goujon (8) une zone concave (54) et en outre, en direction de la partie sommitale (40), une zone extérieure convexe (56) de la surface extérieure et/ou que la partie intermédiaire (42) présente, dans la zone de transition vers la partie sommitale ou les goujons (40), un diamètre extérieur supérieur à celui de la partie sommitale ou des goujons (40) et/ou que la partie intermédiaire (42) présente, en direction de la partie sommitale ou des goujons (40), une surface d'appui (58) s'étendant de préférence dans le sens radial.

10. Système selon une des revendications 1 à 9, **caractérisé en ce que** l'implant (2) présente au moins un premier élément d'indexation (28) avec lequel un second élément d'indexation correspondant d'une pièce rapportée peut être mis en prise pour établir une position définie d'angle de rotation et/ou que l'outil de vissage (4) présente un autre élément d'indexation (28) qui est réalisé de manière à correspondre avec le premier élément d'indexation (28) de l'implant (2) et s'engrène dans celui-ci.
